# EUROPEAN PATENT SPECIFICATION

(11) **EP 4 114 089 B1**
(45) Date of publication and mention of the grant of the patent: **29.10.2025**
(21) Application number: 21776081.8
(22) Date of filing: 25.02.2021
(51) Int. Cl.: H04W 28/02, H04W 48/16, H04W 48/10, H04W 36/06

(54) **METHOD FOR ACCESSING WIRELESS NETWORK AND RELATED DEVICE**
VERFAHREN ZUM ZUGRIFF AUF EIN DRAHTLOSES NETZWERK UND ZUGEHÖRIGE VORRICHTUNG
PROCÉDÉ D'ACCÈS À UN RÉSEAU SANS FIL ET DISPOSITIF ASSOCIÉ

(30) Priority: 25.03.2020 CN 202010218851
(43) Date of publication of application: 04.01.2023
(73) Proprietor: Huawei Technologies Co., Ltd., Shenzhen, Guangdong 518129, (CN)
(72) Inventor: WANG, Yiming, Shenzhen, Guangdong 518129 (CN); ZHOU, Yun, Shenzhen, Guangdong 518129 (CN); GAI, Gang, Shenzhen, Guangdong 518129 (CN)
(74) Representative: Maiwald GmbH
(86) International application number: PCT/CN2021/077782
(87) International publication number: WO 2021/190230

(56) References cited:
- WO-A1-2019/103823
- WO-A1-2019/232758
- CN-A- 105 323 826
- CN-A- 105 933 942
- CN-A- 106 550 425
- US-A1- 2015 230 093
- US-A1- 2017 041 935
- US-A1- 2017 332 314
- US-A1- 2019 182 736
- US-A1- 2019 364 566
- LANCOM: "WLAN Band Steering - LANCOM™ Techpaper", 1 September 2012 (2012-09-01), XP055364634, Retrieved from the Internet <URL:http://www.contica.pl/gfx/contica/userfiles/_public/specyfikacje_en/techpaper/tp-wlan-band-steering-en.pdf> [retrieved on 20170413]
- DVB ORGANIZATION: "WR-SP-WiFi-GW-I04-141201-1.pdf", DVB, DIGITAL VIDEO BROADCASTING, C/O EBU - 17A ANCIENNE ROUTE - CH-1218 GRAND SACONNEX, GENEVA - SWITZERLAND, 11 November 2016 (2016-11-11), XP017851418

## Description

### TECHNICAL FIELD

Embodiments of this application relate to the communication field, and in particular, to a wireless network access method and a related device.

### BACKGROUND

Wireless fidelity (Wi-Fi), also referred to as a "wireless hotspot" in Chinese, is a wireless local area network technology created based on an IEEE 802.11 standard.

2.4 GHz is a wireless frequency band in public use around the world, and 5 GHz is also a wireless frequency band in public use around the world. These two frequency bands are applicable to a short-range wireless transmission technology, and are widely used in household and commercial fields. However, a data transmission rate in the 5 GHz frequency band is higher than a data transmission rate in the 2.4 GHz frequency band. Generally, when a station (STA) accesses a wireless network by using an access point ( AP), the AP may set the STA to access the 2.4 GHz frequency band, or may set the STA to access the 5 GHz frequency band. After accessing a communication frequency band, the STA may perform network communication with another device by using the AP.

When setting the STA to access the wireless network, an existing AP generally connects the STA to the 2.4 GHz frequency band by default. The STA performs the network communication with the another device in the 2.4 GHz frequency band by using the AP. In this way, after the STA accesses the wireless network, a data transmission rate is low, and consequently Internet access experience of a STA user is poor.
Lancom: "WLAN Band Steering - LANCOM™ Techpaper", 1 September 2012, retrieved from the Internet: URL:http://www.contica.pl/gfx/contica/userfiles/_public/specyfikacje_en/techpaper/tp-wlan-band-steering-en.pdf [retrieved on 2017-04-13], discusses Band Steering enables WLAN clients to be controlled such that they operate on a preferred frequency band, usually 5GHz.
US 2015/230093 A1 describes that information on a band supported by an STA may be transmitted to the AP based on a multi-band capability indication bitmap.
US 2019/182736 A1 describes a method of dynamically changing a connection by a terminal in a wireless LAN. The method including determining a change of the connection to another wireless LAN and whether an access point (AP) of the first wireless LAN is the same as an AP of a second wireless LAN by comparing first AP identity determination information received from the first wireless LAN with second AP identity determination information received from the second wireless LAN and transmitting a message for requesting the connection to the second wireless LAN by using a temporary wireless LAN service profile generated on the basis of a wireless LAN service profile for the first wireless LAN, when the AP of the first wireless LAN is the same as the AP of the second wireless LAN.
US 2017/332314 A1 describes an access point (AP) includes: an AP WLAN communicator communicating using a predetermined available channel of a first frequency band; a pointer signal generator generating a pointer signal including available-channel information in the first frequency band and a network identifier; and an AP pointer signal communicator using a specific channel of a second frequency band to send the pointer signal to the wireless terminal. DVB ORGANIZATION: "WR-SP-WiFi-GW-104-141201-1.pdf", DVB, DIGITAL VIDEO BROADCASTING, C/O EBU - 17A ANCIENNE ROUTE - CH-1218 GRAND SACONNEX, GENEVA - SWITZERLAND, 11 November 2016, specifies Wi-Fi requirements for cable modem gateways.

### SUMMARY

The invention is set out in the appended independent claims, wherein further embodiments are set out in the dependent claims. Examples of this application provide a wireless network access method. After an AP determines that a STA has a capability of accessing a second frequency band, the AP may send a probe response to the STA in the second frequency band, and the STA may access the second frequency band based on the probe response. In this way, after the STA accesses a wireless network, a data transmission rate is high, and therefore Internet access experience of a STA user is good.

A first aspect of this application provides a wireless network access method. In the method, an access point AP receives a first probe request sent by a station STA in a first frequency band, where the first probe request is used to indicate the AP to connect the STA to a wireless network; the AP determines, based on the first probe request, that the STA has a capability of accessing a second frequency band, where a data transmission rate of the second frequency band is higher than a data transmission rate of the first frequency band, and a service set identifier SSID of the second frequency band is different from an SSID of the first frequency band; and the AP sends a first probe response to the STA in the second frequency band, where the first probe response is used to indicate the STA to access the second frequency band based on the first probe response.

In this embodiment of this application, after the AP receives a probe request sent by the STA in the first frequency band, the AP determines, based on the probe request, whether the STA has the capability of accessing a second frequency band. The data transmission rate of the second frequency band is higher than the data transmission rate of the first frequency band. After the AP determines that the STA has the capability of accessing a second frequency band, the AP may send a probe response to the STA in the second frequency band, and the STA may access the second frequency band based on the probe response. In this way, after the STA accesses the wireless network, a data transmission rate is high, and therefore Internet access experience of a STA user is good.

The first probe request includes a received signal strength indicator RSSI of the second frequency band that can be transmitted by the STA, and the AP determines, based on the first probe request, that the STA has the capability of accessing a second frequency band. The step includes: the AP determines, based on the RSSI, and optionally based on the radio parameter of the STA, that the STA has the capability of accessing a second frequency band.

In this implementation, the AP may determine, based on a radio parameter and/or the received signal strength indicator RSSI of the second frequency band that can be transmitted by the STA, that the STA has the capability of accessing a second frequency band. This possible implementation provides a specific criterion for determining whether the STA can access the second frequency band, and this possible implementation improves accuracy of a solution.

In a possible implementation of the first aspect, the implementation further includes the following steps: The AP obtains the RSSI based on the first probe request; and the AP determines, based on the RSSI, that the STA has the capability of accessing a second frequency band. The steps include: The AP determines that the RSSI meets a signal strength condition, and the AP determines, based on the RSSI, that the STA has the capability of accessing a second frequency band.

In this possible implementation, the AP determines that the RSSI meets the signal strength condition, and the AP determines, based on the RSSI, that the STA has the capability of accessing a second frequency band. This possible implementation provides the specific criterion for determining whether the STA can access the second frequency band, and this possible implementation improves accuracy of a solution.

In a possible implementation of the first aspect, the implementation further includes: The AP determines, based on the first probe request, that the STA accesses the second frequency band for the first time; and the AP records an association relationship between the STA and the SSID of the second frequency band, where the association relationship is used by the AP to transfer the STA to the second frequency band when the STA accesses the wireless network by using the first frequency band again.

In this possible implementation, if the AP determines, based on the first probe request, that the STA accesses the second frequency band for the first time, the AP may record the association relationship between the STA and the SSID of the second frequency band. This possible implementation improves implementability of a solution.

In a possible implementation of the first aspect, the implementation further includes: The AP determines, based on a probe request sent by the STA in the second frequency band, that the STA accesses the first frequency band for the first time; and the AP records an association relationship between the STA and the SSID of the first frequency band, where the association relationship is used by the AP to transfer the STA to the second frequency band when the STA accesses the wireless network by using the first frequency band again.

In this possible implementation, if the AP determines, based on the probe request sent by the STA in the second frequency band, that the STA accesses the first frequency band for the first time, the AP may record the association relationship between the STA and the SSID of the first frequency band. This possible implementation improves implementability of a solution.

In a possible implementation of the first aspect, the STA supports an 802.11v protocol. The implementation further includes: The AP determines that the STA triggers a frequency band handover condition; the AP breaks a connection between the STA and the second frequency band; and the AP sends frequency band handover information to the STA, where the frequency band handover information is used to indicate the STA to access the first frequency band.

In this possible implementation, after the STA triggers the frequency band handover condition, the AP may break the connection between the STA and the second frequency band, and the AP sends the frequency band handover information to the STA. After receiving the frequency band handover information sent by the AP, the STA accesses the first frequency band. In this possible implementation, when a fault occurs in transmission data of the second frequency band included in the AP, the AP may further connect the STA to the first frequency band. This possible implementation improves stability of the AP.

In a possible implementation of the first aspect, the implementation further includes: The AP receives a second probe request sent by the STA; and the AP connects the STA to the first frequency band based on the second probe request.

In this possible implementation, after the AP receives the second probe request sent by the STA, the AP may connect the STA to the first frequency band based on the second probe request. In this possible implementation, when a fault occurs in transmission data of the second frequency band included in the AP, the AP may further connect the STA to the first frequency band. This possible implementation improves stability of the AP.

A second aspect of this application provides a wireless network access method. In the method, a station STA receives a beacon message sent by an access point AP, where the beacon message includes a service set identifier SSID of a first frequency band and an SSID of a second frequency band, the SSID of the first frequency band is different from the SSID of the second frequency band, and a data transmission rate of the second frequency band is higher than a data transmission rate of the first frequency band; the STA determines, based on the beacon message, that the STA can access the second frequency band; the STA sends a second probe request to the AP, where the second probe request is used to indicate the AP to connect the STA to the second frequency band; and the STA receives a second probe response sent by the AP in the second frequency band, where the second probe response is used to indicate the STA to access the second frequency band based on the second probe response.

In an embodiment of this application, after the STA receives the beacon message sent by the AP, the STA determines, based on the beacon message, whether the STA has a capability of accessing a second frequency band. The data transmission rate of the second frequency band is higher than the data transmission rate of the first frequency band. After determining that the STA has the capability of accessing a second frequency band, the STA may send a probe request to the AP in the second frequency band. After the STA receives a probe response sent by the AP, the STA may access the second frequency band based on the probe response. In this way, after the STA accesses the wireless network, a data transmission rate is high, and therefore Internet access experience of a STA user is good.

In a possible implementation of the second aspect, the implementation further includes: The STA obtains a radio parameter based on the beacon message, and the STA determines, based on the beacon message, that the STA can access the second frequency band. The steps include: The STA determines, based on the radio parameter, that the STA has a capability of transmitting data in the second frequency band, and the STA determines, based on the beacon message, that the STA can access the second frequency band.

In this possible implementation, after the STA receives the beacon message sent by the AP, the STA may obtain a radio parameter of the STA. The STA may determine, based on the radio parameter, whether the STA has the capability of accessing a second frequency band. This possible implementation provides a specific criterion for determining whether the STA can access the second frequency band, and this possible implementation improves accuracy of a solution.

The implementation further includes: The STA obtains, based on the beacon message, received signal strength indicator RSSI of the second frequency band that can be transmitted by the STA; and the STA determines, based on the beacon message, that the STA can access the second frequency band. The steps include: The STA determines that the RSSI meets a signal strength condition, and the STA determines, based on the beacon message, that the STA can access the second frequency band.

In this possible implementation, the STA obtains based on the beacon message, the RSSI of the second frequency band that can be transmitted by the STA, the STA determines that the RSSI meets the signal strength condition, and the STA determines, based on the beacon message, that the STA can access the second frequency band. This possible implementation provides the specific criterion for determining whether the STA can access the second frequency band, and this possible implementation improves accuracy of a solution.

In a possible implementation of the second aspect, the STA supports an 802.11v protocol, and the implementation further includes: The STA receives frequency band handover information sent by the AP, where the frequency band handover information is used to indicate the STA to access the first frequency band; the STA sends a third probe request to the AP based on the frequency band handover information, and the AP connects the STA to the first frequency band based on the third probe request; and the STA receives a third probe response sent by the AP, and the STA accesses the first frequency band based on the third probe response.

In this possible implementation, after the STA triggers a frequency band handover condition, the AP may break a connection between the STA and the second frequency band, and the AP sends the frequency band handover information to the STA. After receiving the frequency band handover information sent by the AP, the STA accesses the first frequency band. In this possible implementation, when a fault occurs in transmission data of the second frequency band accessed by the STA, the STA may access the first frequency band after sending the third probe request. This possible implementation improves stability of the STA.

A third aspect of this application provides an AP, configured to perform the method in any one of the first aspect or the possible implementations of the first aspect. Specifically, the AP includes modules or units configured to perform the method in any one of the first aspect or the possible implementations of the first aspect.

A fourth aspect of this application provides a STA, configured to perform the method in any one of the second aspect or the possible implementations of the second aspect. Specifically, the STA includes modules or units configured to perform the method in any one of the second aspect or the possible implementations of the second aspect.

A non-claimed fifth aspect of this application provides an AP. The AP includes at least one processor, a memory, and a communications interface. The processor is coupled to the memory and the communications interface. The memory is configured to store instructions, the processor is configured to execute the instructions, and the communications interface is configured to communicate with another device under control of the processor. When the instructions are executed by the processor, the processor is enabled to perform the method in any one of the first aspect or the possible implementations of the first aspect.

A non-claimed sixth aspect of this application provides a STA. The STA includes at least one processor, a memory, and a communications interface. The processor is coupled to the memory and the communications interface. The memory is configured to store instructions, the processor is configured to execute the instructions, and the communications interface is configured to communicate with another device under control of the processor. When the instructions are executed by the processor, the processor is enabled to perform the method in any one of the second aspect or the possible implementations of the second aspect.

A non-claimed seventh aspect of this application provides a computer-readable storage medium. The computer-readable storage medium stores a program, and the program enables an AP to perform the method in any one of the first aspect or the possible implementations of the first aspect.

A non-claimed eighth aspect of this application provides a computer-readable storage medium. The computer-readable storage medium stores a program, and the program enables a STA to perform the method in any one of the second aspect or the possible implementations of the second aspect.

A non-claimed ninth aspect of this application provides a computer program product storing one or more computer-executable instructions. When the computer-executable instructions are executed by a processor, the processor performs the method in any one of the first aspect or the possible implementations of the first aspect.

A non-claimed tenth aspect of this application provides a computer program product storing one or more computer-executable instructions. When the computer-executable instructions are executed by a processor, the processor performs the method in any one of the second aspect or the possible implementations of the second aspect.

It can be learned from the foregoing technical solutions that embodiments of this application have the following advantages:

In this embodiment of this application, after the AP receives the probe request sent by the STA in the first frequency band, the AP determines, based on the probe request, whether the STA has the capability of accessing a second frequency band. The data transmission rate of the second frequency band is higher than the data transmission rate of the first frequency band. After the AP determines that the STA has the capability of accessing a second frequency band, the AP may send the probe response to the STA in the second frequency band, and the STA may access the second frequency band based on the probe response. In this way, after the STA accesses the wireless network, a data transmission rate is high, and therefore Internet access experience of a STA user is good.

### BRIEF DESCRIPTION OF DRAWINGS

FIG. 1 is a schematic diagram of an application scenario of a wireless network access system according to an embodiment of this application;
FIG. 2 is a schematic diagram of an embodiment of a wireless network access method according to an example of this application;
FIG. 3 is a schematic diagram of another embodiment of a wireless network access method according to an embodiment of this application;
FIG. 4 is a schematic diagram of another embodiment of a wireless network access method according to an embodiment of this application;
FIG. 5 is a schematic diagram of another embodiment of a wireless network access method according to an embodiment of this application;
FIG. 6 is a schematic diagram of a structure of an AP according to an embodiment of this application;
FIG. 7 is a schematic diagram of a structure of a STA according to an embodiment of this application;
FIG. 8 is a schematic diagram of another structure of an AP according to an example of this application; and
FIG. 9 is a schematic diagram of another structure of a STA according to an example of this application.

### DESCRIPTION OF EMBODIMENTS

The following describes embodiments of this application with reference to the accompanying drawings. It is clear that the described embodiments are merely some rather than all of embodiments of this application. Persons of ordinary skill in the art may learn that with development of technologies and emergence of new scenarios, technical solutions provided in embodiments of this application are also applicable to similar technical problems.

In the specification, claims, and the accompanying drawings of this application, the terms "first", "second", and the like are intended to distinguish between similar objects but do not necessarily indicate a specific order or sequence. It should be understood that data termed in such a way is interchangeable in proper circumstances, so that embodiments described herein can be implemented in other orders than the order illustrated or described herein. Moreover, the terms "include", "contain" and any other variants mean to cover non-exclusive inclusion. For example, a process, method, system, product, or device that includes a list of steps or units is not necessarily limited to those expressly listed steps or units, but may include other steps or units that are not expressly listed or inherent to the process, method, product, or device.

In embodiments of this application, 2.4 GHz is a wireless frequency band in public use around the world, and 5 GHz is also a wireless frequency band in public use around the world. These two frequency bands are applicable to a short-range wireless transmission technology, and are widely used in household and commercial fields. However, a data transmission rate in the 5 GHz frequency band is higher than a data transmission rate in the 2.4 GHz frequency band, and an anti-interference capability of data transmission in the 5 GHz frequency band is also better than an anti-interference capability of data transmission in the 2.4 GHz frequency band. Generally, when a station (STA) accesses a wireless network by using an access point (AP), the AP may set the STA to access the 2.4 GHz frequency band, or may set the STA to access the 5 GHz frequency band. After accessing a communication frequency band, the STA may perform network communication with another device by using the AP.

In real life, a frequency of a transmission signal in the 5 GHz frequency band is relatively high, and a wavelength of a transmission signal in the 5 GHz frequency band is relatively short compared with a wavelength of a transmission signal in the 2.4 GHz frequency band. Therefore, the transmission signal in the 5 GHz frequency band has poorer penetrability than the transmission signal in the 2.4 GHz frequency band, and coverage of the transmission signal in the 5 GHz frequency band is smaller than coverage of the transmission signal in the 2.4 GHz frequency band. When setting the STA to access the wireless network, an existing AP generally connects the STA to the 2.4 GHz frequency band by default. The STA performs the network communication with the another device in the 2.4 GHz frequency band by using the AP. In this way, after the STA accesses the wireless network, a data transmission rate is low, and consequently Internet access experience of a STA user is poor.

To resolve the foregoing problems in an existing wireless network access technology, embodiments of this application provide a wireless network access method and a related device, to improve a data transmission rate of the STA, and improve Internet access experience of a user in some scenarios.

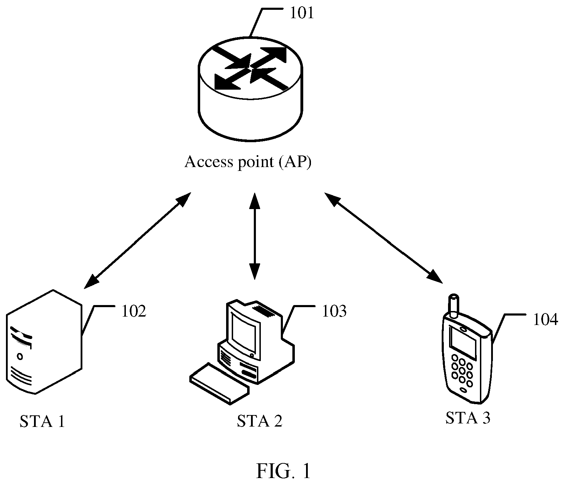

FIG. 1 is a schematic diagram of an application scenario of a wireless network access system according to an embodiment of this application.

Refer to FIG. 1. In this embodiment of this application, a station STA and an access point AP constitute a wireless network access system.

The wireless network access system provided in this embodiment of this application includes an AP 101, a STA 102, a STA 103, and a STA 104.

The STA 102 exchanges data with the AP, the STA 103 exchanges data with the AP, and the STA 104 exchanges data with the AP.

In this embodiment of this application, only one AP and three STAs are used as an example for description. In actual application, optionally, an application scenario of this embodiment of this application may include a plurality of APs and more or fewer STAs than those provided in the embodiment in FIG. 1.

The STA in the wireless network access system is generally a client. The STA may be mobile, or may be fixed, and is the most basic composition unit of a wireless local area network. Optionally, the STA may be a computer equipped with a wireless network interface card, the STA may be a smartphone equipped with a Wi-Fi module, or the STA may be another network-related device. This is not specifically limited herein.

The AP is a typical application of the wireless local area network. The AP is a bridge between a wireless network and a wired network, and is a core device for constructing the wireless local area network. The AP mainly provides mutual access between a wireless station and a wired local area network. In this way, STAs within coverage of an AP signal may communicate with each other by using the AP. Without the AP, the wireless local area network that can access a network in a real sense cannot be constructed basically. Optionally, the AP may be a wireless router, the AP may be a wireless gateway, or the AP may be another network-related device. This is not specifically limited herein.

In this embodiment of this application, when a STA user has a requirement for accessing the wireless network, the user sends a probe request to the AP in a first frequency band by using the STA. A data transmission rate in a second frequency band is higher than a data transmission rate in the first frequency band. The AP determines, based on the probe request, whether the user has a capability of accessing a second frequency band. If the AP determines that the STA has the capability of accessing a second frequency band, the AP sends a probe response to the STA in the second frequency band. In this way, the STA may access the second frequency band based on the probe response. Further, after the STA accesses the wireless network, a data transmission rate is high, and therefore Internet access experience of a STA user is good.

Based on the wireless network access system described in FIG. 1, a wireless network access method provided in an embodiment of this application is described.

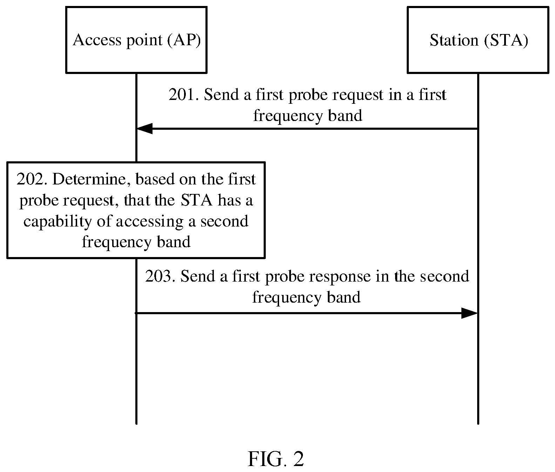

Refer to FIG. 2. An embodiment of a wireless network access method according to an embodiment of this application includes step 201 to step 203.

201. An AP receives a first probe request sent by a STA in a first frequency band.

In this embodiment of this application, when the STAhas a requirement for accessing a wireless network, the AP receives the first probe request sent by the STA. The first probe request is used to indicate the AP to connect the STA to the wireless network.

For example, the first probe request may be a probe request frame. The STA scans, by using the probe request frame, an AP that supports an IEEE 802.11 network standard and that currently exists in an area in which the STA is located. After receiving the probe request frame, the AP may connect the STA to a wireless network connected to the AP.

202. The AP determines, based on the first probe request, that the STA has a capability of accessing a second frequency band.

In this embodiment of this application, a frequency band used to transmit data in the AP may include the first frequency band and the second frequency band, and a data transmission rate of the second frequency band is higher than a data transmission rate of the first frequency band. A service set identifier (SSID) of the second frequency band is different from an SSID of the first frequency band.

203. The AP sends a first probe response to the STA in the second frequency band.

In this embodiment of this application, after the AP determines, based on the first probe request, that the STA has the capability of accessing a second frequency band, the AP sends the first probe response to the STA in the second frequency band. The first probe response is used to indicate the STA to access the second frequency band based on the first probe response.

In this embodiment of this application, after the AP receives the first probe request sent by the STA in the first frequency band, the AP determines, based on the first probe request, whether the STA has the capability of accessing a second frequency band. The data transmission rate of the second frequency band is higher than the data transmission rate of the first frequency band. After the AP determines that the STA has the capability of accessing a second frequency band, the AP may send the first probe response to the STA in the second frequency band, and the STA may access the second frequency band based on the first probe response. In this way, after the STA accesses the wireless network, a data transmission rate is high, and therefore Internet access experience of a STA user is good.

In this embodiment of this application, that the AP determines, based on the first probe request, that the STA has a capability of accessing a second frequency band mentioned in step 202 has a specific implementation. In this embodiment of this application, the AP may determine, based on a radio parameter, that the STA has the capability of accessing a second frequency band. This specific implementation is described in the following embodiment.

The AP determines, based on the radio parameter, that the STA has the capability of accessing a second frequency band.

In this embodiment of this application, optionally, the first probe request may include a radio parameter of the STA, and the radio parameter is used to indicate that the STA has the capability of accessing a second frequency band.

For example, when the first frequency band is a 2.4 GHz frequency band, and the second frequency band is a 5 GHz frequency band, the radio parameter included in the first probe request may include a Wi-Fi physical parameter of the STA. The AP determines, based on the Wi-Fi physical parameter of the STA, a type of a protocol supported by a Wi-Fi module in the STA. If the AP determines, based on the Wi-Fi physical parameter of the STA, that the Wi-Fi module in the STA supports only an IEEE 802.11b protocol and/or an IEEE 802.11g protocol, the AP may determine that the STA can transmit data only in the 2.4 GHz frequency band, the STA cannot transmit data in the 5 GHz frequency band, and the STA does not support the 5 GHz frequency band. If the AP determines, based on the Wi-Fi physical parameter of the STA, that the Wi-Fi module in the STA supports an IEEE 802.11n protocol and/or an IEEE 802.11ac protocol, the AP may determine that the STA can transmit data in the 5 GHz frequency band, and the STA supports the 5 GHz frequency band. If the AP determines that the STA supports the 5 GHz frequency band, the AP determines that the STA has the capability of accessing a second frequency band.

For example, when the first frequency band is a 5 GHz frequency band, and the second frequency band is a 6 GHz frequency band, the radio parameter included in the first probe request may include a Wi-Fi physical parameter of the STA. The AP determines, based on the Wi-Fi physical parameter of the STA, a type of a protocol supported by a Wi-Fi module in the STA. If the AP determines, based on the Wi-Fi physical parameter of the STA, that the Wi-Fi module in the STA can support an IEEE 802.11ax protocol, the AP may determine that the STA can transmit data in the 6 GHz frequency band, and the STA has a capability of accessing the 6 GHz frequency band. If the AP determines, based on the Wi-Fi physical parameter of the STA, that the Wi-Fi module in the STA does not support the IEEE 802.11ax protocol, the AP may determine that the STA cannot transmit data in the 6 GHz frequency band, and the STA has no capability of accessing the 6 GHz frequency band.

In this embodiment of this application, the AP determines that a received signal strength indicator (RSSI) meets a signal strength condition, and the AP determines that the STA has the capability of accessing a second frequency band. This specific implementation is described in the following embodiment.

The AP determines that the RSSI meets the signal strength condition, and the AP determines, based on the RSSI, that the STA has the capability of accessing a second frequency band.

In this embodiment of this application, the first probe request includes an RSSI of the second frequency band that can be transmitted by the STA.

For example, when the first frequency band is the 2.4 GHz frequency band, and the second frequency band is the 5 GHz frequency band, the first probe request includes the RSSI of the second frequency band that can be transmitted by the STA. The RSSI is an optional part of a wireless transport layer, and is mainly used to determine link quality between a receiving device and a sending device, and used to calculate a distance between the receiving device and the sending device. After the AP determines that an RSSI of the STA in the 5 GHz frequency band exceeds a specified threshold, the AP determines that at a distance between the STA and the AP, data exchange may be implemented between the AP and the STA in the 5 GHz frequency band. The AP determines that the STA has a capability of accessing the 5 GHz frequency band.

For example, when the first frequency band is the 5 GHz frequency band, and the second frequency band is the 6 GHz frequency band, the first probe request includes the RSSI of the second frequency band that can be transmitted by the STA. The RSSI is an optional part of a wireless transport layer, and is mainly used to determine link quality between a receiving device and a sending device, and used to calculate a distance between the receiving device and the sending device. After the AP determines that an RSSI of the STA in the 6 GHz frequency band exceeds a specified threshold, the AP determines that at a distance between the STA and the AP, data exchange may be implemented between the AP and the STA in the 6 GHz frequency band. The AP determines that the STA has a capability of accessing the 6 GHz frequency band.

In this embodiment of this application, that the AP determines, based on the first probe request that the STA has a capability of accessing a second frequency band mentioned in step 202 has a specific implementation. The foregoing embodiment is separately described by using an example in which the AP determines, based on the radio parameter, that the STA has the capability of accessing a second frequency band, and an example in which the AP determines that the received RSSI meets the signal strength condition, and the AP determines, based on the RSSI, that the STA can access the second frequency band. In this embodiment of this application, that the AP determines, based on the first probe request, that the STA has a capability of accessing a second frequency band mentioned in step 202 may alternatively have another implementation. This is not specifically limited herein.

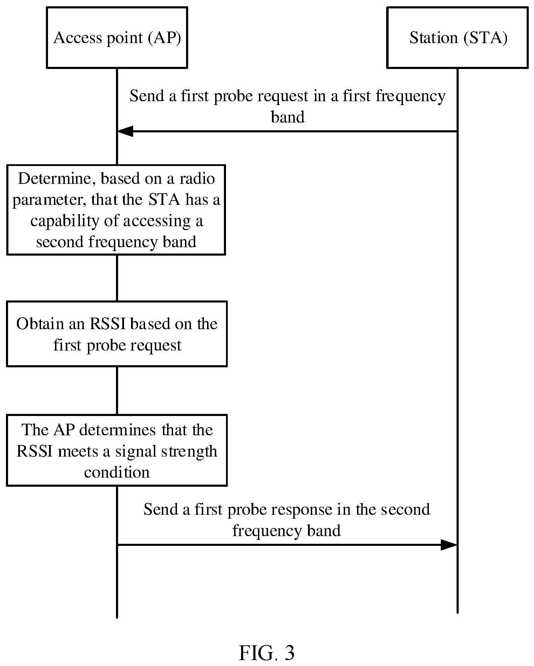

FIG. 3 is a schematic diagram of an embodiment of a wireless network access method according to an embodiment of this application.

Refer to FIG. 3. In this embodiment of this application, the AP may alternatively first determine, based on the radio parameter included in the first probe request, that the STA has a capability of transmitting data in the second frequency band, and then determine, based on the RSSI, that the STA can access the second frequency band. When the two conditions are both met, the AP determines that the STA has the capability of accessing a second frequency band, and the AP sends the first probe response to the STA in the second frequency band, so that the AP connects the STA to the second frequency band.

In this embodiment of this application, optionally, the AP may further determine, based on a probe request sent by the STA in the second frequency band, whether the STA accesses the second frequency band for the first time. After the AP determines, based on the probe request sent by the STA in the second frequency band, that the STA accesses the second frequency band for the first time, the AP may record an association relationship between the STA and the SSID of the second frequency band accessed by the STA, where the association relationship is used by the AP to transfer the STA to the second frequency band when the STA accesses the wireless network by using the first frequency band again. After an operator modifies the SSID of the second frequency band on the AP, when the STA logs in to the second frequency band corresponding to a modified SSID for the first time, the AP may record an association relationship between the STA and the modified SSID.

In this embodiment of this application, when the AP records the association relationship between the STA and the SSID of the second frequency band accessed by the STA, the AP may record the association relationship in a local database, or the AP may record the association relationship in a cloud database. This is not specifically limited herein.

In this embodiment of this application, optionally, the AP may alternatively determine, based on the first probe request, whether the STA accesses the first frequency band for the first time. After the AP determines, based on the first probe request, that the STA accesses the first frequency band for the first time, the AP may record an association relationship between the STA and the SSID of the first frequency band accessed by the STA, where the association relationship is used by the AP to transfer the STA to the second frequency band when the STA accesses the wireless network by using the first frequency band again. After the operator modifies the SSID of the first frequency band on the AP, when the STA logs in to the first frequency band corresponding to a modified SSID for the first time, the AP may record an association relationship between the STA and the modified SSID.

In this embodiment of this application, when the AP records the association relationship between the STA and the SSID of the first frequency band accessed by the STA, the AP may record the association relationship in the local database, or the AP may record the association relationship in the cloud database. This is not specifically limited herein.

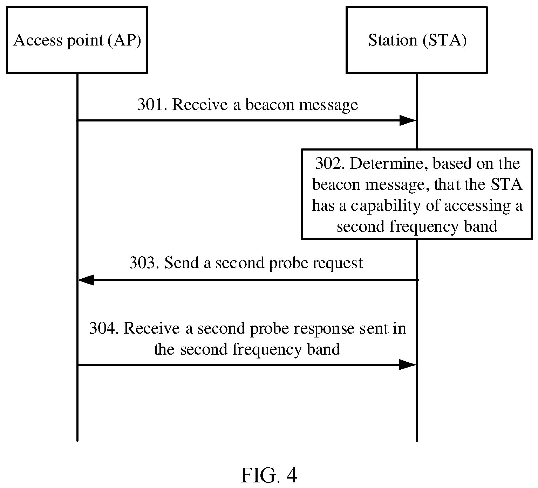

Refer to FIG. 4. An embodiment of a wireless network access method according to an embodiment of this application includes step 301 to step 304.

301. A station STA receives a beacon message sent by an access point AP.

In this embodiment of this application, optionally, the beacon message includes an SSID of a first frequency band and an SSID of a second frequency band, and the beacon message may further include other content. This is not specifically limited herein.

In this embodiment of this application, the SSID of the first frequency band is different from the SSID of the second frequency band, and a data transmission rate of the second frequency band is higher than a data transmission rate of the first frequency band.

302. The STA determines, based on the beacon message, that the STA has a capability of accessing a second frequency band.

303. The STA sends a second probe request to the AP.

In this embodiment of this application, the second probe request is used to indicate the AP to connect the STA to the second frequency band.

304. The STA receives a second probe response sent by the AP in the second frequency band.

In this embodiment of this application, the second probe response is used to indicate the STA to access the second frequency band based on a probe response.

In this embodiment of this application, after the STA receives the beacon message sent by the AP, the STA determines, based on the beacon message, whether the STA has the capability of accessing a second frequency band. The data transmission rate of the second frequency band is higher than the data transmission rate of the first frequency band. After determining that the STAhas the capability of accessing a second frequency band, the STA may send the second probe request to the AP in the second frequency band. After the STA receives the second probe response sent by the AP, the STA may access the second frequency band based on the second probe response. In this way, after the STA accesses a wireless network, a data transmission rate is high, and therefore Internet access experience of a STA user is good.

In this embodiment of this application, that the STA determines, based on the beacon message, that the STA has a capability of accessing a second frequency band mentioned in step 302 has a specific implementation. In this embodiment of this application, the STA may determine, based on a radio parameter, that the STA has the capability of accessing a second frequency band. This specific implementation is described in the following embodiment.

The STA determines, based on the radio parameter, that the STA has a capability of transmitting data in the second frequency band.

For example, when the first frequency band is a 2.4 GHz frequency band, and the second frequency band is a 5 GHz frequency band, after the STA receives the beacon message, the STA may obtain a radio parameter of the STA. The radio parameter may include a Wi-Fi physical parameter of the STA. The STA determines, based on the Wi-Fi physical parameter, a type of a protocol supported by a Wi-Fi module included in the STA. If the STA determines, based on the Wi-Fi physical parameter, that the Wi-Fi module included in the STA supports only an IEEE 802.11b protocol and/or an IEEE 802.11g protocol, the STA may determine that the STA can transmit data only in the 2.4 GHz frequency band, the STA cannot transmit data in the 5 GHz frequency band, and the STA does not support the 5 GHz frequency band. If the STA determines, based on the Wi-Fi physical parameter, that the Wi-Fi module in the STA supports an IEEE 802.11n protocol and/or an IEEE 802.11ac protocol, the STA may determine that the STA can transmit data in the 5 GHz frequency band, and the STA supports the 5 GHz frequency band. If the STA determines that the STA supports the 5 GHz frequency band, the STA determines that the STA has the capability of accessing a second frequency band.

For example, when the first frequency band is a 5 GHz frequency band, and the second frequency band is a 6 GHz frequency band, after the STA receives the beacon message, the STA may obtain a radio parameter of the STA. The radio parameter may include a Wi-Fi physical parameter of the STA. The STA determines, based on the Wi-Fi physical parameter, a type of a protocol supported by a Wi-Fi module included in the STA. If the STA determines, based on the Wi-Fi physical parameter, that the Wi-Fi module in the STA can support an IEEE 802.11ax protocol, the STA may determine that the STA can transmit data in the 6 GHz frequency band, and the STA has a capability of accessing the 6 GHz frequency band. If the STA determines, based on the Wi-Fi physical parameter of the STA, that the Wi-Fi module in the STA does not support the IEEE 802.11ax protocol, the STA may determine that the STA cannot transmit data in the 6 GHz frequency band, and the STA has no capability of accessing the 6 GHz frequency band.

In this embodiment of this application, the STA determines that an RSSI meets a signal strength condition, and the STA determines, based on the beacon message, that the STA can access the second frequency band. The STA determines that the STA has the capability of accessing a second frequency band. This specific implementation is described in the following embodiment.

The STA determines that the RSSI meets the signal strength condition, and the STA determines, based on the beacon message, that the STA can access the second frequency band.

In this embodiment of this application, after the STA receives the beacon message, the STA obtains received signal strength indicator RSSI of the second frequency band that can be transmitted by the STA.

For example, when the first frequency band is the 2.4 GHz frequency band, and the second frequency band is the 5 GHz frequency band, the STA obtains an RSSI of the second frequency band that can be transmitted by the STA. The RSSI is an optional part of a wireless transport layer, and is mainly used to determine link quality between a receiving device and a sending device, and used to calculate a distance between the receiving device and the sending device. After the STA determines that an RSSI of the STA in the 5 GHz frequency band exceeds a specified threshold, the STA determines that at a distance between the STA and the AP, data exchange may be implemented between the AP and the STA in the 5 GHz frequency band. The STA determines that the STA has a capability of accessing the 5 GHz frequency band.

For example, when the first frequency band is the 5 GHz frequency band, and the second frequency band is the 6 GHz frequency band, the STA obtains the RSSI of the second frequency band that can be transmitted by the STA. The RSSI is an optional part of a wireless transport layer, and is mainly used to determine link quality between a receiving device and a sending device, and used to calculate a distance between the receiving device and the sending device. After the STA determines that an RSSI of the STA in the 6 GHz frequency band exceeds a specified threshold, the STA determines that at a distance between the STA and the AP, data exchange may be implemented between the AP and the STA in the 6 GHz frequency band. The STA determines that the STA has the capability of accessing the 6 GHz frequency band.

Optionally, in this embodiment of this application, that the STA determines, based on the beacon message, that the STA has the capability of accessing a second frequency band has a specific implementation. The foregoing embodiment is separately described by using an example in which the STA determines, based on the radio parameter, that the STA has the capability of transmitting data in the second frequency band, and an example in which the STA determines that the RSSI meets the signal strength condition, and the STA determines, based on the beacon message, that the STA can access the second frequency band. In this embodiment of this application, the STA may alternatively first determine, based on the beacon message, that the STA has the capability of accessing a second frequency band, and then determine, based on the RSSI, that the STA can access the second frequency band. When the two conditions are both met, the STA determines that the STA has the capability of accessing a second frequency band, so that the STA sends a second probe request to the AP. In this embodiment of this application, that the STA determines, based on the beacon message, that the STA has the capability of accessing a second frequency band mentioned in step 302 may alternatively have another implementation. This is not specifically limited herein.

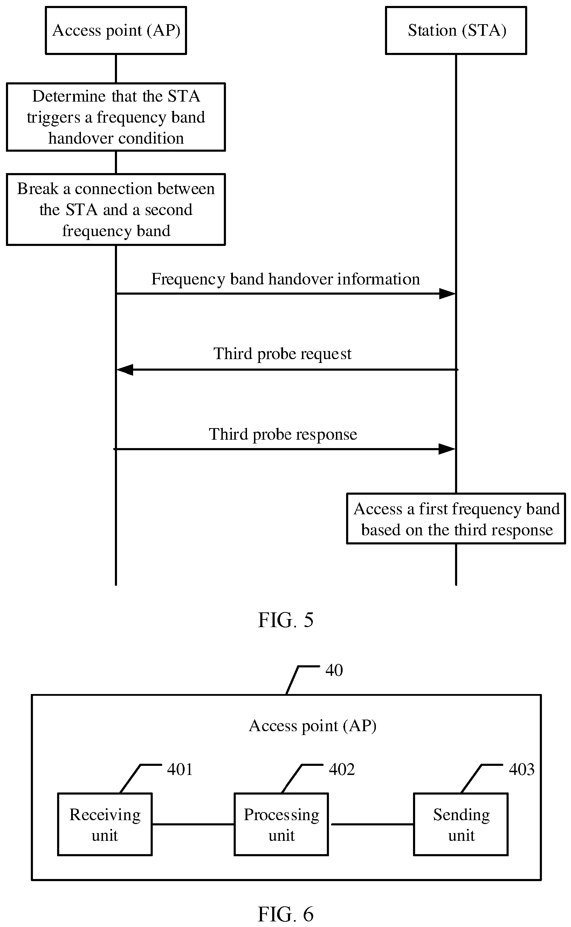

FIG. 5 is a schematic diagram of an embodiment of a wireless network access method according to an embodiment of this application.

Refer to FIG. 5. In this embodiment of this application, based on the embodiment described in steps 201 to 203, or based on the embodiment described in steps 301 to 304, optionally, if the STA supports an 802.11v protocol, when the AP determines that the STA triggers a frequency band handover condition, the AP may break a connection between the STA and the second frequency band. After the AP may break the connection between the STA and the second frequency band, the AP may send frequency band handover information to the STA. The frequency band handover information may indicate the STA to access the first frequency band. After receiving the frequency band handover information sent by the AP, the STA may send a third probe request to the AP. After receiving the third probe request, the AP sends a third probe response to the STA. The STA may access the first frequency band based on the third probe response.

The foregoing embodiments provide the specific implementations of a wireless network access method. The following provides an access point AP 40. As shown in FIG. 6, the AP 40 is configured to perform the steps performed by the AP in the foregoing embodiments. For specific understanding of the execution steps and the corresponding beneficial effects, refer to the foregoing corresponding embodiments. Details are not described herein again. The AP 40 includes:
a receiving unit 401, configured to receive a first probe request sent by a station STA in a first frequency band, where the first probe request is used to indicate the AP to connect the STA to a wireless network;
a processing unit 402, configured to determine, based on the first probe request, that the STA has a capability of accessing a second frequency band, where a data transmission rate of the second frequency band is higher than a data transmission rate of the first frequency band, and a service set identifier SSID of the second frequency band is different from an SSID of the first frequency band; and
a sending unit 403, configured to send a first probe response to the STA in the second frequency band, where the first probe response is used to indicate the STA to access the second frequency band based on the first probe response.

According to the invention, the first probe request includes a received signal strength indicator RSSI of the second frequency band that can be transmitted by the STA, and may further include a ratio parameter of the STA.

The processing unit 402 is configured to determine, based on the radio parameter of the STA and/or the RSSI, that the STA has the capability of accessing a second frequency band.

According to the invention, the processing unit 402 is further configured to:
obtain the RSSI based on the first probe request, and
determine that the RSSI meets a signal strength condition; and the AP determines, based on the RSSI, that the STA has the capability of accessing a second frequency band.

In a specific implementation, the processing unit 402 is further configured to:
determine, based on a probe request sent by the STA in the second frequency band, that the STA accesses the second frequency band for the first time; and
record an association relationship between the STA and the SSID of the second frequency band, where the association relationship is used by the AP to transfer the STA to the second frequency band when the STA accesses the wireless network by using the first frequency band again.

In a specific implementation, the processing unit 402 is further configured to:
determine, based on the first probe request, that the STA accesses the first frequency band for the first time;
   and
record an association relationship between the STA and the SSID of the first frequency band, where the association relationship is used by the AP to transfer the STA to the second frequency band when the STA accesses the wireless network by using the first frequency band again.

It should be noted that content such as information exchange between the modules of the AP 40 and the execution processes thereof is based on the same concept as the method embodiments of this application, and produces the same technical effects as the method embodiments of the present invention. For the specific content, refer to the foregoing descriptions in the method embodiments of this application. Details are not described herein again.

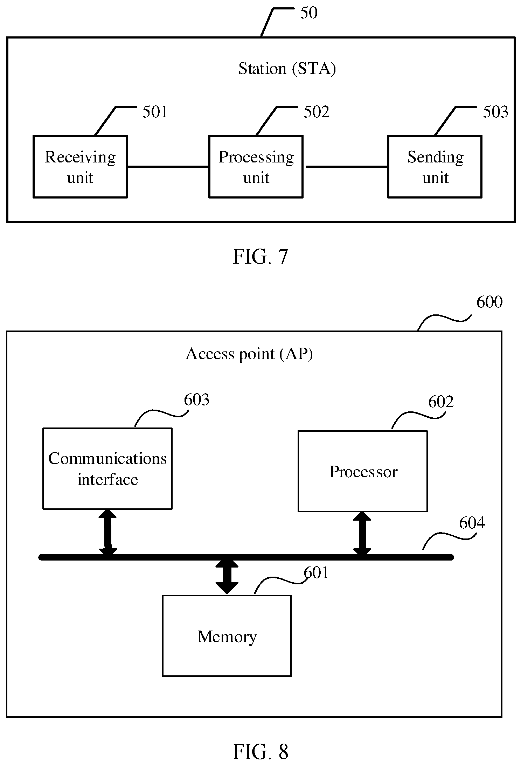

The foregoing embodiment provides an access point AP 40, and the following provides a station STA 50. As shown in FIG. 7, the STA 50 is configured to perform the steps performed by the STA in the foregoing embodiment. For specific understanding of the execution steps and the corresponding beneficial effects, refer to the foregoing corresponding embodiment. Details are not described herein again. The STA 50 includes:
a receiving unit 501, configured to receive a beacon message sent by an access point AP, where the beacon message includes a service set identifier SSID of a first frequency band and an SSID of a second frequency band, the SSID of the first frequency band is different from the SSID of the second frequency band, and a data transmission rate of the second frequency band is higher than a data transmission rate of the first frequency band;
a processing unit 502, configured to determine, based on the beacon message, that the STA can access the second frequency band; and
a sending unit 503, configured to send a second probe request to the AP, where the second probe request is used to indicate the AP to connect the STA to the second frequency band, where
the receiving unit 501 is configured to receive a second probe response sent by the AP in the second frequency band, where the second probe response is used to indicate the STA to access the second frequency band based on the second probe response.

In a specific implementation, the processing unit 502 is further configured to:
obtain a radio parameter based on the beacon message, and
determine, based on the radio parameter, that the STA has a capability of transmitting data in the second frequency band; and the STA determines, based on the beacon message, that the STA can access the second frequency band.

According to the invention, the processing unit 502 is further configured to:
obtain, based on the beacon message, received signal strength indicator RSSI of the second frequency band that can be transmitted by the STA, and
determine that the RSSI meets a signal strength condition; and the STA determines, based on the beacon message, that the STA can access the second frequency band.

In a specific implementation, the STA supports an 802.11v protocol;
the receiving unit 502 is further configured to receive frequency band handover information sent by the AP, where the frequency band handover information is used to indicate the STA to access the first frequency band;
the sending unit 503 is further configured to send a third probe request to the AP based on the frequency band handover information, and the AP connects the STA to the first frequency band based on the third probe request; and
the receiving unit 501 is further configured to receive a third probe response sent by the AP, and the STA accesses the first frequency band based on the third probe response.

It should be noted that content such as information exchange between the modules of the STA 50 and the execution processes thereof is based on the same concept as the method embodiments of this application, and produces the same technical effects as the method embodiments of the present invention. For the specific content, refer to the foregoing descriptions in the method embodiments of this application. Details are not described herein again.

FIG. 8 is a schematic diagram of a structure of an access point AP according to an embodiment of this application. An AP 600 includes a processor 602, a communications interface 603, a memory 601, and a bus 604. The communications interface 603, the processor 602, and the memory 601 are connected to each other by using the bus 604. The bus 604 may be a peripheral component interconnect (PCI) bus, an extended industry standard architecture (EISA) bus, or the like. The bus may be classified into an address bus, a data bus, a control bus, and the like. For ease of representation, only one thick line is used to represent the bus in FIG. 8, but this does not mean that there is only one bus or only one type of bus. The AP 600 may implement the function of the AP in the embodiment shown in FIG. 6. The processor 602 and the communications interface 603 may perform the corresponding function of the AP in the foregoing method examples.

With reference to FIG. 8, the following specifically describes each component of the AP.

The processor 602 is a control center of a controller, and may be a central processing unit (CPU), or may be an application specific integrated circuit (ASIC), or one or more integrated circuits configured to implement embodiments of this application, for example, one or more digital signal processors (DSPs), or one or more field programmable gate arrays (FPGAs).

The communications interface 603 is configured to communicate with another device.

In an example, the communications interface 603 is configured to receive a first probe request sent by a station STA in a first frequency band.

In an example, the communications interface 603 is configured to send a first probe response to the STA in a second frequency band.

The processor 602 may perform the operation performed by the AP in the embodiment shown in FIG. 6. Details are not described herein again.

In a possible implementation, the processor 602 runs or executes a software program and/or a module stored in the memory 601, and invokes data stored in the memory 601, to perform the following functions:

After the processor determines that the STA has a capability of accessing a second frequency band, the processor may send a probe response to the STA in the second frequency band, and the STA may access the second frequency band based on the probe response. In this way, after the STA accesses a wireless network, a data transmission rate is high, and therefore Internet access experience of a STA user is good.

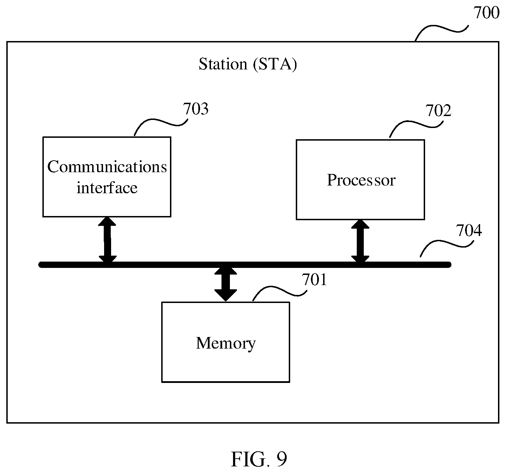

FIG. 9 is a schematic diagram of a structure of a STA according to an embodiment of this application. A STA 700 includes a processor 702, a communications interface 703, a memory 701, and a bus 704. The communications interface 703, the processor 702, and the memory 701 are connected to each other by using the bus 704. The bus 704 may be a peripheral component interconnect (PCI) bus, an extended industry standard architecture (EISA) bus, or the like. The bus may be classified into an address bus, a data bus, a control bus, and the like. For ease of representation, only one thick line is used to represent the bus in FIG. 9, but this does not mean that there is only one bus or only one type of bus. The STA 700 may implement the function of the STA in the embodiment shown in FIG. 7. The processor 702 and the communications interface 703 may perform the corresponding function of the STA in the foregoing method examples.

The following describes all components of the STA in detail with reference to FIG. 9.

The processor 702 is a control center of a controller, and may be a central processing unit ( CPU), or may be an application specific integrated circuit (ASIC), or one or more integrated circuits configured to implement embodiments of this application, for example, one or more digital signal processors (DSPs), or one or more field programmable gate arrays (FPGAs).

The communications interface 703 is configured to communicate with another device.

In an example, the communications interface 703 is configured to receive a beacon message sent by the access point AP.

In an example, the communications interface 703 is configured to send a second probe request to the AP.

In an example, the communications interface 703 is configured to receive a second probe response sent by the AP in a second frequency band.

In an example, the communications interface 703 is configured to receive frequency band handover information sent by the AP.

In an example, the communications interface 703 is configured to receive a third probe response sent by the AP.

The processor 702 may perform the operation performed by the STA in the embodiment shown in FIG. 7. Details are not described herein again.

In a possible implementation, the processor 702 runs or executes a software program and/or a module stored in the memory 701, and invokes data stored in the memory 701, to perform the following functions:

After the processor 702 receives the beacon message sent by the AP, the processor 702 determines, based on the beacon message, whether the STA has a capability of accessing a second frequency band. A data transmission rate of the second frequency band is higher than a data transmission rate of a first frequency band. After the processor 702 determines that the processor 702 has the capability of accessing a second frequency band, the processor 702 may send the second probe request to the AP in the second frequency band. After the processor 702 receives the second probe response sent by the AP, the processor 702 may access the second frequency band based on the second probe response. In this way, after the STA accesses a wireless network, a data transmission rate is high, and therefore Internet access experience of a STA user is good.

This application further provides a chip system. The chip system includes a processor, configured to support the foregoing forwarding device or control device to implement functions related to the forwarding device or control device, for example, receiving or processing the packet and/or information in the foregoing method embodiments. In a possible design, the chip system further includes a memory. The memory is configured to store program instructions and data that are necessary for a computer device. The chip system may include a chip, or may include a chip and another discrete component.

All or some of the foregoing embodiments may be implemented by software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, all or some of the procedures or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD), or the like.

Persons skilled in the art may clearly understand that, for the purpose of convenient and brief description, for detailed working processes of the foregoing system, apparatuses, and units, refer to corresponding processes in the foregoing method embodiments. Details are not described herein again.

In the several embodiments provided in this application, it should be understood that the disclosed system, apparatus, and method may be implemented in another manner. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or the units may be implemented in electrical, mechanical, or other forms.

The units described as separate components may or may not be physically separate, and components displayed as units may or may not be physical units. To be specific, the components may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments, without departing from the scope of the technical solutions of embodiments of this application.

## Claims

1. A wireless network access method, comprising:
receiving (201), by an access point (101), AP, a first probe request sent by a station (102, 103, 104), STA, in a first frequency band, wherein the first probe request is used to indicate the AP (101) to connect the STA to a wireless network, wherein the first probe request comprises a received signal strength indicator, RSSI, of a second frequency band that can be transmitted by the STA (102, 103, 104);
determining (202), by the AP (101) based on the RSSI, that the STA (102, 103, 104) has a capability of accessing the second frequency band, wherein a data transmission rate of the second frequency band is higher than a data transmission rate of the first frequency band, and a service set identifier, SSID, of the second frequency band is different from an SSID of the first frequency band; and
sending (203), by the AP (101), a first probe response to the STA in the second frequency band, wherein the first probe response is used to indicate the STA to access the second frequency band based on the first probe response.

2. The wireless network access method according to claim 1, further comprising:
before receiving, by the AP (101), the first probe request by the STA (102, 103, 104), sending, by the AP (101), a beacon message, wherein the beacon message comprises the SSID of the first frequency band and the SSID of the second frequency band.

3. The wireless network access method according to claim 2, wherein the method further comprises:
obtaining, by the AP (101), the RSSI based on the first probe request; and
the determining, by the AP (101) based on the RSSI, that the STA (102, 103, 104) has the capability of accessing a second frequency band comprises:
determining, by the AP (101), that the RSSI meets a signal strength condition, and determining, by the AP (101) based on the RSSI, that the STA (102, 103, 104) has the capability of accessing the second frequency band.

4. The wireless network access method according to any one of claims 1 to 3, wherein the method further comprises:
determining, by the AP (101) based on a probe request sent by the STA (102, 103, 104) in the second frequency band, that the STA (102, 103, 104) accesses the second frequency band for the first time; and
recording, by the AP (101), an association relationship between the STA (102, 103, 104) and the SSID of the second frequency band, wherein the association relationship is used by the AP (101) to transfer the STA to the second frequency band when the STA (102, 103, 104) accesses the wireless network by using the first frequency band again.

5. The wireless network access method according to claim 4, wherein the method further comprises:
determining, by the AP (101) based on the first probe request, that the STA (102, 103, 104) accesses the first frequency band for the first time; and
recording, by the AP (101), an association relationship between the STA (102, 103, 104) and the SSID of the first frequency band, wherein the association relationship is used by the AP (101) to transfer the STA (102, 103, 104) to the second frequency band when the STA (102, 103, 104) accesses the wireless network by using the first frequency band again.

6. A wireless network access method, comprising:
receiving (301), by a station (102, 103, 104), STA, a beacon message sent by an access point (101), AP, wherein the beacon message comprises a service set identifier, SSID, of a first frequency band and an SSID of a second frequency band, the SSID of the first frequency band is different from the SSID of the second frequency band, and a data transmission rate of the second frequency band is higher than a data transmission rate of the first frequency band;
obtaining, by the STA (102, 103, 104) based on the beacon message, received signal strength indicator, RSSI, of the second frequency band that can be transmitted by the STA (102, 103, 104);
determining, by the STA (102, 103, 104) that the RSSI meets a signal strength condition, and determining (302), by the STA (102, 103, 104) based on the beacon message, that the STA (102, 103, 104) can access the second frequency band;
sending (303), by the STA (102, 103, 104), a second probe request to the AP (101), wherein the second probe request is used to indicate the AP (101) to connect the STA (102, 103, 104) to the second frequency band; and
receiving (304), by the STA (102, 103, 104), a second probe response sent by the AP (101) in the second frequency band, wherein the second probe response is used to indicate the STA (102, 103, 104) to access the second frequency band based on the second probe response.

7. The wireless network access method according to claim 6, wherein the method further comprises:
obtaining, by the STA (102, 103, 104), a radio parameter based on the beacon message, and
the determining, by the STA (102, 103, 104) based on the beacon message, that the STA (102, 103, 104) can access the second frequency band comprises:
determining, by the STA (102, 103, 104) based on the radio parameter, that the STA (102, 103, 104) has a capability of transmitting data in the second frequency band, and determining, by the STA (102, 103, 104) based on the beacon message, that the STA (102, 103, 104) can access the second frequency band.

8. The wireless network access method according to claim 6, wherein the STA (102, 103, 104) supports an 802.11v protocol, and the method further comprises:
receiving, by the STA (102, 103, 104), frequency band handover information sent by the AP (101), wherein the frequency band handover information is used to indicate the STA (102, 103, 104) to access the first frequency band;
sending, by the STA (102, 103, 104), a third probe request to the AP (101) based on the frequency band handover information, and connecting, by the AP (101), the STA (102, 103, 104) to the first frequency band based on the third probe request; and
receiving, by the STA (102, 103, 104), a third probe response sent by the AP (101), and accessing, by the STA (102, 103, 104), the first frequency band based on the third probe response.

9. An access point (40), AP, comprising:
a receiving unit (401), configured to receive a first probe request sent by a station, STA, in a first frequency band, wherein the first probe request is used to indicate the AP to connect the STA to a wireless network, wherein the first probe request comprises a received signal strength indicator, RSSI, of the second frequency band that can be transmitted by the STA;
a processing unit (402), configured to determine, based on the RSSI, that the STA has a capability of accessing a second frequency band, wherein a data transmission rate of the second frequency band is higher than a data transmission rate of the first frequency band, and a service set identifier, SSID, of the second frequency band is different from an SSID of the first frequency band; and
a sending unit (403), configured to send a first probe response to the STA in the second frequency band, wherein the first probe response is used to indicate the STA to access the second frequency band based on the first probe response.

10. The AP according to claim 9, wherein the AP is further configured to send a beacon message to the STA before the first probe request is received by the AP, wherein the beacon message comprises the SSID of the first frequency band and the SSID of the second frequency band.

11. The AP according to claim 10, wherein
the processing unit (402) is further configured to:
obtain the RSSI based on the first probe request, and
determine that the RSSI meets a signal strength condition; and
determine, based on the RSSI, that the STA has the capability of accessing a second frequency band.

12. The AP according to any one of claims 9 to 11, wherein
the processing unit (402) is further configured to:
determine, based on a probe request sent by the STA in the second frequency band, that the STA accesses the second frequency band for the first time; and
record an association relationship between the STA and the SSID of the second frequency band, wherein the association relationship is used by the AP to transfer the STA to the second frequency band when the STA accesses the wireless network by using the first frequency band again.

13. The AP according to claim 12, wherein
the processing unit (402) is further configured to:
determine, based on the first probe request, that the STA accesses the first frequency band for the first time; and
record an association relationship between the STA and the SSID of the first frequency band, wherein the association relationship is used by the AP to transfer the STA to the second frequency band when the STA accesses the wireless network by using the first frequency band again.

14. A station (50), STA, comprising:
a receiving unit (501), configured to receive a beacon message sent by an access point ,AP, wherein the beacon message comprises a service set identifier, SSID, of a first frequency band and an SSID of a second frequency band, the SSID of the first frequency band is different from the SSID of the second frequency band, and a data transmission rate of the second frequency band is higher than a data transmission rate of the first frequency band;
a processing unit (502), configured to obtain, based on the beacon message, received signal strength indicator, RSSI, of the second frequency band that can be transmitted by the STA, determine that the RSSI meets a signal strength condition, and determine, based on the beacon message, that the STA can access the second frequency band; and
a sending unit (503), configured to send a second probe request to the AP, wherein the second probe request is used to indicate the AP to connect the STA to the second frequency band, wherein
the receiving unit (501) is configured to receive a second probe response sent by the AP in the second frequency band, wherein the second probe response is used to indicate the STA to access the second frequency band based on the second probe response.

15. The STA according to claim 14, wherein
the processing unit (502) is further configured to:
obtain a radio parameter based on the beacon message, and
determine, based on the radio parameter, that the STA has a capability of transmitting data in the second frequency band; and the STA determines, based on the beacon message, that the STA can access the second frequency band.

16. The STA according to claim 14 or 15, wherein the STA supports an 802.11v protocol;
the receiving unit (501) is further configured to receive frequency band handover information sent by the AP, wherein the frequency band handover information is used to indicate the STA to access the first frequency band;
the sending unit (503) is further configured to send a third probe request to the AP based on the frequency band handover information, and the AP connects the STA to the first frequency band based on the third probe request; and
the receiving unit (501) is further configured to receive a third probe response sent by the AP, and the STA accesses the first frequency band based on the third probe response.

## Patentansprüche

1. Drahtloses Netzwerkzugriffsverfahren, umfassend:
Empfangen (201) einer ersten Anfrageanforderung, die durch eine Station (102, 103, 104), STA, in einem ersten Frequenzband gesendet wird, durch einen Zugriffspunkt (101), AP, wobei die erste Anfrageanforderung verwendet wird, um den AP (101) zum Verbinden der STA mit einem drahtlosen Netzwerk anzuzeigen, wobei die erste Anfrageanforderung eine Anzeige der empfangenen Signalstärke, RSSI, eines zweiten Frequenzbands umfasst, das durch die STA (102, 103, 104) übertragen werden kann;
Bestimmen (202) durch den AP (101) basierend auf der RSSI, dass die STA (102, 103, 104) die Fähigkeit zum Zugreifen auf das zweite Frequenzband aufweist, wobei eine Datenübertragungsrate des zweiten Frequenzbands höher als eine Datenübertragungsrate des ersten Frequenzbands ist und sich eine Service Set-Kennung, SSID, des zweiten Frequenzbands von einer SSID des ersten Frequenzbands unterscheidet; und
Senden (203) einer ersten Anfrageantwort durch den AP (101) an die STA in dem zweiten Frequenzband, wobei die erste Anfrageantwort verwendet wird, um die STA zum Zugreifen auf das zweite Frequenzband basierend auf der ersten Anfrageantwort anzuzeigen.

2. Drahtloses Netzwerkzugriffsverfahren nach Anspruch 1, ferner umfassend:
vor dem Empfangen der ersten Anfrageanforderung durch die STA (102, 103, 104) durch den AP (101), Senden einer Beacon-Nachricht durch den AP (101), wobei die Beacon-Nachricht die SSID des ersten Frequenzbands und die SSID des zweiten Frequenzbands umfasst.

3. Drahtloses Netzwerkzugriffsverfahren nach Anspruch 2, wobei das Verfahren ferner Folgendes umfasst:
Erlangen der RSSI durch den AP (101) basierend auf der ersten Anfrageanforderung; und
das Bestimmen durch den AP (101) basierend auf der RSSI, dass die STA (102, 103, 104) die Fähigkeit zum Zugreifen auf ein zweites Frequenzband aufweist, Folgendes umfasst:
Bestimmen durch den AP (101), dass die RSSI eine Signalstärkebedingung erfüllt, und Bestimmen durch den AP (101) basierend auf der RSSI, dass die STA (102, 103, 104) die Fähigkeit zum Zugreifen auf das zweite Frequenzband aufweist.

4. Drahtloses Netzwerkzugriffsverfahren nach einem der Ansprüche 1 bis 3, wobei das Verfahren ferner Folgendes umfasst:
Bestimmen durch den AP (101) basierend auf einer Anfrageanforderung, die durch die STA (102, 103, 104) in dem zweiten Frequenzband gesendet wird, dass die STA (102, 103, 104) erstmals auf das zweite Frequenzband zugreift; und
Aufzeichnen einer Zuordnungsbeziehung zwischen der STA (102, 103, 104) und der SSID des zweiten Frequenzbands durch den AP (101), wobei die Zuordnungsbeziehung durch den AP (101) verwendet wird, um die STA an das zweite Frequenzband zu übertragen, wenn die STA (102, 103, 104) erneut unter Verwendung des ersten Frequenzbands auf das drahtlose Netzwerk zugreift.

5. Drahtloses Netzwerkzugriffsverfahren nach Anspruch 4, wobei das Verfahren ferner Folgendes umfasst:
Bestimmen durch den AP (101) basierend auf der ersten Anfrageanforderung, dass die STA (102, 103, 104) erstmals auf das erste Frequenzband zugreift; und
Aufzeichnen einer Zuordnungsbeziehung zwischen der STA (102, 103, 104) und der SSID des ersten Frequenzbands durch den AP (101), wobei die Zuordnungsbeziehung durch den AP (101) verwendet wird, um die STA (102, 103, 104) an das zweite Frequenzband zu übertragen, wenn die STA (102, 103, 104) erneut unter Verwendung des ersten Frequenzbands auf das drahtlose Netzwerk zugreift.

6. Drahtloses Netzwerkzugriffsverfahren, umfassend:
Empfangen (301) einer durch einen Zugriffspunkt (101), AP, gesendeten Beacon-Nachricht durch eine Station (102, 103, 104), STA, wobei die Beacon-Nachricht eine Service Set-Kennung, SSID, eines ersten Frequenzbands und eine SSID eines zweiten Frequenzbands umfasst, sich die SSID des ersten Frequenzbands von der SSID des zweiten Frequenzbands unterscheidet und eine Datenübertragungsrate des zweiten Frequenzbands höher als eine Datenübertragungsrate des ersten Frequenzbands ist;
Erlangen der Anzeige der empfangenen Signalstärke, RSSI, des zweiten Frequenzbands, das durch die STA (102, 103, 104) übertragen werden kann, durch die STA (102, 103, 104) basierend auf der Beacon-Nachricht;
Bestimmen durch die STA (102, 103, 104), dass die RSSI eine Signalstärkebedingung erfüllt, und Bestimmen (302) durch die STA (102, 103, 104) basierend auf der Beacon-Nachricht, dass die STA (102, 103, 104) auf das zweite Frequenzband zugreifen kann;
Senden (303) einer zweiten Anfrageanforderung durch die STA (102, 103, 104) an den AP (101), wobei die zweite Anfrageanforderung verwendet wird, um den AP (101) zum Verbinden der STA (102, 103, 104) mit dem zweiten Frequenzband anzuzeigen; und
Empfangen (304) einer zweiten Anfrageantwort, die durch den AP (101) in dem zweiten Frequenzband gesendet wird, durch die STA (102, 103, 104), wobei die zweite Anfrageantwort verwendet wird, um die STA (102, 103, 104) zum Zugreifen auf das zweite Frequenzband basierend auf der zweiten Anfrageantwort anzuzeigen.

7. Drahtloses Netzwerkzugriffsverfahren nach Anspruch 6, wobei das Verfahren ferner Folgendes umfasst:
Erlangen eines Funkparameters basierend auf der Beacon-Nachricht durch die STA (102, 103, 104), und
das Bestimmen durch die STA (102, 103, 104) basierend auf der Beacon-Nachricht, dass die STA (102, 103, 104) auf das zweite Frequenzband zugreifen kann, Folgendes umfasst:
Bestimmen durch die STA (102, 103, 104) basierend auf dem Funkparameter, dass die STA (102, 103, 104) die Fähigkeit zum Übertragen von Daten in dem zweiten Frequenzband aufweist, und Bestimmen durch die STA (102, 103, 104) basierend auf der Beacon-Nachricht, dass die STA (102, 103, 104) auf das zweite Frequenzband zugreifen kann.

8. Drahtloses Netzwerkzugriffsverfahren nach Anspruch 6, wobei die STA (102, 103, 104) ein 802.11v-Protokoll unterstützt und das Verfahren ferner Folgendes umfasst:
Empfangen von durch den AP (101) gesendeten Informationen über die Frequenzbandübergabe durch die STA (102, 103, 104), wobei die Informationen über die Frequenzbandübergabe verwendet werden, um die STA (102, 103, 104) zum Zugreifen auf das erste Frequenzband anzuzeigen;
Senden einer dritten Anfrageanforderung durch die STA (102, 103, 104) an den AP (101) basierend auf den Informationen über die Frequenzbandübergabe und Verbinden der STA (102, 103, 104) mit dem ersten Frequenzband durch den AP (101) basierend auf der dritten Anfrageanforderung; und
Empfangen einer dritten Anfrageantwort, die durch den AP (101) gesendet wird, durch die STA (102, 103, 104), und Zugreifen auf das erste Frequenzband basierend auf der dritten Anfrageantwort durch die STA (102, 103, 104).

9. Zugriffspunkt (40), AP, umfassend:
eine Empfangseinheit (401), die dazu konfiguriert ist, eine erste Anfrageanforderung zu empfangen, die durch eine Station, STA, in einem ersten Frequenzband gesendet wird, wobei die erste Anfrageanforderung verwendet wird, um den AP zum Verbinden der STA mit einem drahtlosen Netzwerk anzuzeigen, wobei die erste Anfrageanforderung eine Anzeige der empfangenen Signalstärke, RSSI, des zweiten Frequenzbands umfasst, das durch die STA übertragen werden kann;
eine Verarbeitungseinheit (402), die dazu konfiguriert ist, basierend auf der RSSI zu bestimmen, dass die STA die Fähigkeit zum Zugreifen auf ein zweites Frequenzband aufweist, wobei eine Datenübertragungsrate des zweiten Frequenzbands höher als eine Datenübertragungsrate des ersten Frequenzbands ist und sich eine Service Set-Kennung, SSID, des zweiten Frequenzbands von einer SSID des ersten Frequenzbands unterscheidet; und
eine Sendeeinheit (403), die dazu konfiguriert ist, eine erste Anfrageantwort an die STA in dem zweiten Frequenzband zu senden, wobei die erste Anfrageantwort verwendet wird, um die STA zum Zugreifen auf das zweite Frequenzband basierend auf der ersten Anfrageantwort anzuzeigen.

10. AP nach Anspruch 9, wobei der AP ferner dazu konfiguriert ist, eine Beacon-Nachricht an die STA zu senden, bevor die erste Anfrageanforderung durch den AP empfangen wird, wobei die Beacon-Nachricht die SSID des ersten Frequenzbands und die SSID des zweiten Frequenzbands umfasst.

11. AP nach Anspruch 10, wobei
die Verarbeitungseinheit (402) ferner dazu konfiguriert ist:
die RSSI basierend auf der ersten Anfrageanforderung zu erlangen,
und
zu bestimmen, dass die RSSI eine Signalstärkebedingung erfüllt;
und
basierend auf der RSSI zu bestimmen, dass die STA die Fähigkeit zum Zugreifen auf ein zweites Frequenzband aufweist.

12. AP nach einem der Ansprüche 9 bis 11, wobei
die Verarbeitungseinheit (402) ferner dazu konfiguriert ist:
basierend auf einer durch die STA in dem zweiten Frequenzband gesendeten Anfrageanforderung zu bestimmen, dass die STA erstmals auf das zweite Frequenzband zugreift; und
eine Zuordnungsbeziehung zwischen der STA und der SSID des zweiten Frequenzbands aufzuzeichnen, wobei die Zuordnungsbeziehung durch den AP verwendet wird, um die STA an das zweite Frequenzband zu übertragen, wenn die STA erneut unter Verwendung des ersten Frequenzbands auf das drahtlose Netzwerk zugreift.

13. AP nach Anspruch 12, wobei
die Verarbeitungseinheit (402) ferner dazu konfiguriert ist:
basierend auf der ersten Anfrageanforderung zu bestimmen, dass die STA erstmals auf das erste Frequenzband zugreift; und
eine Zuordnungsbeziehung zwischen der STA und der SSID des ersten Frequenzbands aufzuzeichnen, wobei die Zuordnungsbeziehung durch den AP verwendet wird, um die STA an das zweite Frequenzband zu übertragen, wenn die STA erneut unter Verwendung des ersten Frequenzbands auf das drahtlose Netzwerk zugreift.

14. Station (50), STA, umfassend:
eine Empfangseinheit (501), die dazu konfiguriert ist, eine durch einen Zugriffspunkt, AP, gesendete Beacon-Nachricht zu empfangen, wobei die Beacon-Nachricht eine Service Set-Kennung, SSID, eines ersten Frequenzbands und eine SSID eines zweiten Frequenzbands umfasst, sich die SSID des ersten Frequenzbands von der SSID des zweiten Frequenzbands unterscheidet und eine Datenübertragungsrate des zweiten Frequenzbands höher als eine Datenübertragungsrate des ersten Frequenzbands ist;
eine Verarbeitungseinheit (502), die dazu konfiguriert ist, basierend auf der Beacon-Nachricht die Anzeige der empfangenen Signalstärke, RSSI, des zweiten Frequenzbands zu erlangen, das durch die STA übertragen werden kann, zu bestimmen, dass die RSSI eine Signalstärkebedingung erfüllt, und basierend auf der Beacon-Nachricht zu bestimmen, dass die STA auf das zweite Frequenzband zugreifen kann; und
eine Sendeeinheit (503), die dazu konfiguriert ist, eine zweite Anfrageanforderung an den AP zu senden, wobei die zweite Anfrageanforderung verwendet wird, um den AP zum Verbinden der STA mit dem zweiten Frequenzband anzuzeigen, wobei
die Empfangseinheit (501) dazu konfiguriert ist, eine zweite Anfrageantwort zu empfangen, die durch den AP in dem zweiten Frequenzband gesendet wird, wobei die zweite Anfrageantwort verwendet wird, um die STA zum Zugreifen auf das zweite Frequenzband basierend auf der zweiten Anfrageantwort anzuzeigen.

15. STA nach Anspruch 14, wobei
die Verarbeitungseinheit (502) ferner dazu konfiguriert ist:
einen Funkparameter basierend auf der Beacon-Nachricht erlangen,
und
basierend auf dem Funkparameter zu bestimmen, dass die STA die Fähigkeit zum Übertragen von Daten in dem zweiten Frequenzband aufweist; und die STA basierend auf der Beacon-Nachricht bestimmt, dass die STA auf das zweite Frequenzband zugreifen kann.

16. STA nach Anspruch 14 oder 15, wobei die STA ein 802.11v-Protokoll unterstützt;
die Empfangseinheit (501) ferner dazu konfiguriert ist, durch den AP gesendete Informationen über die Frequenzbandübergabe zu empfangen, wobei die Informationen über die Frequenzbandübergabe verwendet werden, um die STA zum Zugreifen auf das erste Frequenzband anzuzeigen;
die Sendeeinheit (503) ferner dazu konfiguriert ist, eine dritte Anfrageanforderung basierend auf den Informationen über die Frequenzbandübergabe an den AP zu senden, und der AP die STA basierend auf der dritten Anfrageanforderung mit dem ersten Frequenzband verbindet; und
die Empfangseinheit (501) ferner dazu konfiguriert ist, eine durch den AP gesendete dritte Anfrageantwort zu empfangen, und die STA basierend auf der dritten Anfrageantwort auf das erste Frequenzband zugreift.

## Revendications

1. Procédé d'accès à un réseau sans fil, comprenant :
la réception (201), par un point d'accès (101), AP, d'une première demande de sonde envoyée par une station (102, 103, 104), STA, dans une première bande de fréquence, dans lequel la première demande de sonde est utilisée pour indiquer à l'AP (101) de connecter la STA à un réseau sans fil, dans lequel la première demande de sonde comprend un indicateur de force de signal reçu, RSSI, d'une seconde bande de fréquence qui peut être transmise par la STA (102, 103, 104) ;
la détermination (202), par l'AP (101) sur la base du RSSI, que la STA (102, 103, 104) a une capacité d'accéder à la seconde bande de fréquence, dans lequel un débit de transmission de données de la seconde bande de fréquence est supérieur à un débit de transmission de données de la première bande de fréquence, et un identifiant d'ensemble de services, SSID, de la seconde bande de fréquence est différent d'un SSID de la première bande de fréquence ; et
l'envoi (203), par l'AP (101), d'une première réponse de sonde à la STA dans la seconde bande de fréquence, dans lequel la première réponse de sonde est utilisée pour indiquer à la STA d'accéder à la seconde bande de fréquence sur la base de la première réponse de sonde.

2. Procédé d'accès au réseau sans fil selon la revendication 1, comprenant également :
avant la réception, par l'AP (101), de la première demande de sonde par la STA (102, 103, 104), l'envoi, par l'AP (101), d'un message de balise, dans lequel le message de balise comprend le SSID de la première bande de fréquence et le SSID de la seconde bande de fréquence.

3. Procédé d'accès à un réseau sans fil selon la revendication 2, dans lequel le procédé comprend également :
l'obtention, par l'AP (101), du RSSI sur la base de la première demande de sonde ; et
la détermination, par l'AP (101) sur la base du RSSI, que la STA (102, 103, 104) a la capacité d'accéder à une seconde bande de fréquence comprend :
la détermination, par l'AP (101), que le RSSI satisfait une condition de force de signal, et la détermination, par l'AP (101) sur la base du RSSI, que la STA (102, 103, 104) a la capacité d'accéder à la seconde bande de fréquence.

4. Procédé d'accès à un réseau sans fil selon l'une quelconque des revendications 1 à 3, dans lequel le procédé comprend également :
la détermination, par l'AP (101) sur la base d'une demande de sonde envoyée par la STA (102, 103, 104) dans la seconde bande de fréquence, que la STA (102, 103, 104) accède à la seconde bande de fréquence pour la première fois ; et
l'enregistrement, par l'AP (101), d'une relation d'association entre la STA (102, 103, 104) et le SSID de la seconde bande de fréquence, dans lequel la relation d'association est utilisée par l'AP (101) pour transférer la STA vers la seconde bande de fréquence lorsque la STA (102, 103, 104) accède au réseau sans fil en utilisant à nouveau la première bande de fréquence.

5. Procédé d'accès à un réseau sans fil selon la revendication 4, dans lequel le procédé comprend également :
la détermination, par l'AP (101) sur la base de la première demande de sonde, que la STA (102, 103, 104) accède à la première bande de fréquence pour la première fois ; et
l'enregistrement, par l'AP (101), d'une relation d'association entre la STA (102, 103, 104) et le SSID de la première bande de fréquence, dans lequel la relation d'association est utilisée par l'AP (101) pour transférer la STA (102, 103, 104) vers la seconde bande de fréquence lorsque la STA (102, 103, 104) accède au réseau sans fil en utilisant à nouveau la première bande de fréquence.

6. Procédé d'accès à un réseau sans fil, comprenant :
la réception (301), par une station (102, 103, 104), STA, d'un message de balise envoyé par un point d'accès (101), AP, dans lequel le message de balise comprend un identifiant d'ensemble de services, SSID, d'une première bande de fréquence et un SSID d'une seconde bande de fréquence, le SSID de la première bande de fréquence est différent du SSID de la seconde bande de fréquence, et un débit de transmission de données de la seconde bande de fréquence est supérieur à un débit de transmission de données de la première bande de fréquence ;
l'obtention, par la STA (102, 103, 104) sur la base du message de balise, d'un indicateur de force de signal reçu, RSSI, de la seconde bande de fréquence qui peut être transmise par la STA (102, 103, 104) ;
la détermination, par la STA (102, 103, 104) que le RSSI satisfait une condition de force de signal, et la détermination (302), par la STA (102, 103, 104) sur la base du message de balise, que la STA (102, 103, 104) peut accéder à la seconde bande de fréquence ; l'envoi (303), par la STA (102, 103, 104), d'une deuxième demande de sonde à l'AP (101), dans lequel la deuxième demande de sonde est utilisée pour indiquer à l'AP (101) de connecter la STA (102, 103, 104) à la seconde bande de fréquence ; et
la réception (304), par la STA (102, 103, 104), d'une deuxième réponse de sonde envoyée par l'AP (101) dans la seconde bande de fréquence, dans lequel la deuxième réponse de sonde est utilisée pour indiquer à la STA (102, 103, 104) d'accéder à la seconde bande de fréquence sur la base de la deuxième réponse de sonde.

7. Procédé d'accès à un réseau sans fil selon la revendication 6, dans lequel le procédé comprend également :
l'obtention, par la STA (102, 103, 104), d'un paramètre radio sur la base du message de balise, et
la détermination, par la STA (102, 103, 104) sur la base du message de balise, que la STA (102, 103, 104) peut accéder à la seconde bande de fréquence comprend :
la détermination, par la STA (102, 103, 104) sur la base du paramètre radio, que la STA (102, 103, 104) a une capacité de transmission de données dans la seconde bande de fréquence, et la détermination, par la STA (102, 103, 104) sur la base du message de balise, que la STA (102, 103, 104) peut accéder à la seconde bande de fréquence.

8. Procédé d'accès à un réseau sans fil selon la revendication 6, dans lequel la STA (102, 103, 104) prend en charge le protocole 802.11v, et le procédé comprend également :
la réception, par la STA (102, 103, 104), d'informations de transfert de bande de fréquence envoyées par l'AP (101), dans lequel les informations de transfert de bande de fréquence sont utilisées pour indiquer à la STA (102, 103, 104) d'accéder à la première bande de fréquence ;
l'envoi, par la STA (102, 103, 104), d'une troisième demande de sonde à l'AP (101) sur la base des informations de transfert de bande de fréquence, et la connexion, par l'AP (101), de la STA (102, 103, 104) à la première bande de fréquence sur la base de la troisième demande de sonde ; et
la réception, par la STA (102, 103, 104), d'une troisième réponse de sonde envoyée par l'AP (101), et l'accès, par la STA (102, 103, 104), de la première bande de fréquence sur la base de la troisième réponse de sonde.

9. Point d'accès (40), AP, comprenant :
une unité de réception (401), configurée pour recevoir une première demande de sonde envoyée par une station, STA, dans une première bande de fréquence, dans lequel la première demande de sonde est utilisée pour indiquer à l'AP de connecter la STA à un réseau sans fil, dans lequel la première demande de sonde comprend un indicateur de force de signal reçu, RSSI, de la seconde bande de fréquence qui peut être transmise par la STA ;
une unité de traitement (402), configurée pour déterminer, sur la base du RSSI, que la STA a une capacité d'accéder à une seconde bande de fréquence, dans lequel un débit de transmission de données de la seconde bande de fréquence est supérieur à un débit de transmission de données de la première bande de fréquence, et un identifiant d'ensemble de services, SSID, de la seconde bande de fréquence est différent d'un SSID de la première bande de fréquence ; et
une unité d'envoi (403), configurée pour envoyer une première réponse de sonde à la STA dans la seconde bande de fréquence, dans lequel la première réponse de sonde est utilisée pour indiquer à la STA d'accéder à la seconde bande de fréquence sur la base de la première réponse de sonde.

10. AP selon la revendication 9, dans lequel l'AP est également configuré pour envoyer un message de balise à la STA avant que la première demande de sonde ne soit reçue par l'AP, dans lequel le message de balise comprend le SSID de la première bande de fréquence et le SSID de la seconde bande de fréquence.

11. AP selon la revendication 10, dans lequel
l'unité de traitement (402) est également configurée pour :
obtenir le RSSI sur la base de la première demande de sonde, et
déterminer que le RSSI satisfait une condition de force de signal ;
et
déterminer, sur la base du RSSI, que la STA a la capacité d'accéder à une seconde bande de fréquence.

12. AP selon l'une quelconque des revendications 9 à 11, dans lequel
l'unité de traitement (402) est également configurée pour :
déterminer, sur la base d'une demande de sonde envoyée par la STA dans la seconde bande de fréquence, que la STA accède à la seconde bande de fréquence pour la première fois ; et
enregistrer une relation d'association entre la STA et le SSID de la seconde bande de fréquence, dans lequel la relation d'association est utilisée par l'AP pour transférer la STA vers la seconde bande de fréquence lorsque la STA accède au réseau sans fil en utilisant à nouveau la première bande de fréquence.

13. AP selon la revendication 12, dans lequel
l'unité de traitement (402) est également configurée pour :
déterminer, sur la base de la première demande de sonde, que la STA accède à la première bande de fréquence pour la première fois ;
et
enregistrer une relation d'association entre la STA et le SSID de la première bande de fréquence, dans lequel la relation d'association est utilisée par l'AP pour transférer la STA vers la seconde bande de fréquence lorsque la STA accède au réseau sans fil en utilisant à nouveau la première bande de fréquence.

14. Station (50), STA, comprenant :
une unité de réception (501), configurée pour recevoir un message de balise envoyé par un point d'accès, AP, dans laquelle le message de balise comprend un identifiant d'ensemble de services, SSID, d'une première bande de fréquence et un SSID d'une seconde bande de fréquence, le SSID de la première bande de fréquence est différent du SSID de la seconde bande de fréquence, et un débit de transmission de données de la seconde bande de fréquence est supérieur à un débit de transmission de données de la première bande de fréquence ;
une unité de traitement (502), configurée pour obtenir, sur la base du message de balise, l'indicateur de force de signal reçu, RSSI, de la seconde bande de fréquence qui peut être transmise par la STA, déterminer que le RSSI satisfait une condition de force de signal, et déterminer, sur la base du message de balise, que la STA peut accéder à la seconde bande de fréquence ; et
une unité d'envoi (503), configurée pour envoyer une deuxième demande de sonde à l'AP, dans laquelle la deuxième demande de sonde est utilisée pour indiquer à l'AP de connecter la STA à la seconde bande de fréquence, dans laquelle
l'unité de réception (501) est configurée pour recevoir une deuxième réponse de sonde envoyée par l'AP dans la seconde bande de fréquence, dans laquelle la deuxième réponse de sonde est utilisée pour indiquer à la STA d'accéder à la seconde bande de fréquence sur la base de la deuxième réponse de sonde.

15. STA selon la revendication 14, dans laquelle
l'unité de traitement (502) est également configurée pour :
obtenir un paramètre radio sur la base du message de balise, et
déterminer, sur la base du paramètre radio, que la STA a une capacité de transmettre des données dans la seconde bande de fréquence ; et la STA détermine, sur la base du message de balise, que la STA peut accéder à la seconde bande de fréquence.

16. STA selon la revendication 14 ou 15, dans laquelle la STA prend en charge un protocole 802.11v ;
l'unité de réception (501) est également configurée pour recevoir des informations de transfert de bande de fréquence envoyées par l'AP, dans laquelle les informations de transfert de bande de fréquence sont utilisées pour indiquer à la STA d'accéder à la première bande de fréquence ;
l'unité d'envoi (503) est également configurée pour envoyer une troisième demande de sonde à l'AP sur la base des informations de transfert de bande de fréquence, et l'AP connecte la STA à la première bande de fréquence sur la base de la troisième demande de sonde ; et
l'unité de réception (501) est également configurée pour recevoir une troisième réponse de sonde envoyée par l'AP, et la STA accède à la première bande de fréquence sur la base de la troisième réponse de sonde.
